# EUROPEAN PATENT APPLICATION

(11) **EP 1 455 362 A1**
(43) Date of publication of application: **08.09.2004**
(21) Application number: 04003623.8
(22) Date of filing: 18.02.2004
(51) Int. Cl.: G11B 33/04

(54) **Mail product**

(30) Priority: 21.02.2003 IT VR20030018
(71) Applicant: Serafini, Roberto, 38050 Cognola, Prov. of Trento (IT)
(72) Inventor: Serafini, Roberto, 38050 Cognola, Prov. of Trento (IT)
(74) Representative: Modiano, Guido, Dr.-Ing.

(57) **Abstract**

A mail product (1), comprising a container (2) for accommodating at least one digital data medium (6); the container (2) comprising a region that is suitable for application of addressee identification data.

## Description

The present invention relates to a mail product.

Currently there are several types of mail products, such as for example envelopes, parcels and postcards, which, depending on their type and/or weight, require different mailing methods and, as is widely well-known, different franking costs or fees.

However, it is now a common opinion that the quantity and quality of data that can be sent by way of a postcard or letter is extremely limited, especially in view of the new technologies that can be used currently.

If a person or company wishes to send information on media other than the classic and conventional paper media, it is in fact currently very difficult to do so, unless using couriers, but this entails high forwarding costs.

As an alternative, one would have to purchase an envelope, optionally provided with means for cushioning impacts, insert the medium of different kinds that one wishes to send in such envelope, weigh the envelope and frank it according to the total weight.

It is evident that this procedure is highly inconvenient and that accordingly people or companies are currently scarcely inclined to use the mail service to send information recorded on media other than classic "traditional" paper media (postcards, letters or magazines).

The aim of the present invention is to provide a mail product that is capable of eliminating or in any case significantly reducing the drawbacks noted above in known types.

Within this aim, an object of the invention is to provide a mail product that allows to simply and effectively send information that due to its quality and quantity cannot be sent by means of paper media.

Another object of the present invention is to ensure very easy insertion of the mail product in the mailing cycle of conventional mail products.

Another object of the present invention is to provide a mail product that has a low production cost so as to be advantageous also from an economical standpoint.

This aim and these and other objects that will become better apparent hereinafter are achieved by a mail product, characterized in that it comprises a container for accommodating at least one digital data medium, said container comprising a region that is suitable for application of addressee identification data.

Further aspects and advantages of the invention will become better apparent from the present detailed description of some currently preferred embodiments, given merely by way of non-limiting example with reference to the accompanying drawings, wherein:
Figure 1 is a perspective view of a mail product according to the invention;
Figure 2 is an elevation view of the front face of a mail product according to the invention;
Figure 3 is an elevation view of the rear face of a mail product according to the invention;
Figure 4 is a side elevation view of a mail product;
Figure 5 is an elevation view of a variation of a mail product according to the invention.

In the examples of embodiments that follow, individual characteristics, given in relation to specific examples, may actually be interchanged with other different characteristics that exist in other examples of embodiment.

With reference to the figures, a mail product, generally designated by the reference numeral 1, according to the invention, comprises a container 2 which can be variously shaped according to the different functional and/or aesthetic requirements.

For example, the container 2 can be shaped like an envelope or can be constituted by a protective sleeve made of plastics or of any suitable material.

According to the invention, the container is provided with a region suitable for application of addressee identification data 3.

Conveniently, such region suitable for applying addressee identification data 3 can be constituted by a plurality of substantially straight lines 3, or by a portion that is adapted to accommodate an adhesive label, or by a substantially transparent window.

Advantageously, on the container 2 a franking area 4 is provided. Such franking area 4 can be constituted for example by a polygonal area designed to indicate the region where the user has to apply the stamp or stamps required to frank a mail product 1 according to the invention.

Naturally, nothing prevents the franking area 4 from being franked in advance, before the mail product 1 is put on sale, for example by screen printing or similar methods.

Naturally, as clearly shown in Figures 2 and 3, both the franking area 4 and the region suitable for application of addressee identification data 3 can be provided at a face (which can be defined as rear face) 2a of the container 2, while at the opposite face 2b (or front face) it is optionally possible to provide one or more images 5.

According to the invention, the container 2 is designed to contain at least one digital data medium 6.

Merely by way of example, such digital data medium can be constituted for example by a DVD (Digital Versatile Disc), by a CD-ROM, by a Video CD or by a Super Video CD in any available dimensions.

Of course, especially in view of the continuing technological evolution in the multimedia field, use of different digital data media 6 in a more or less near future is not limited.

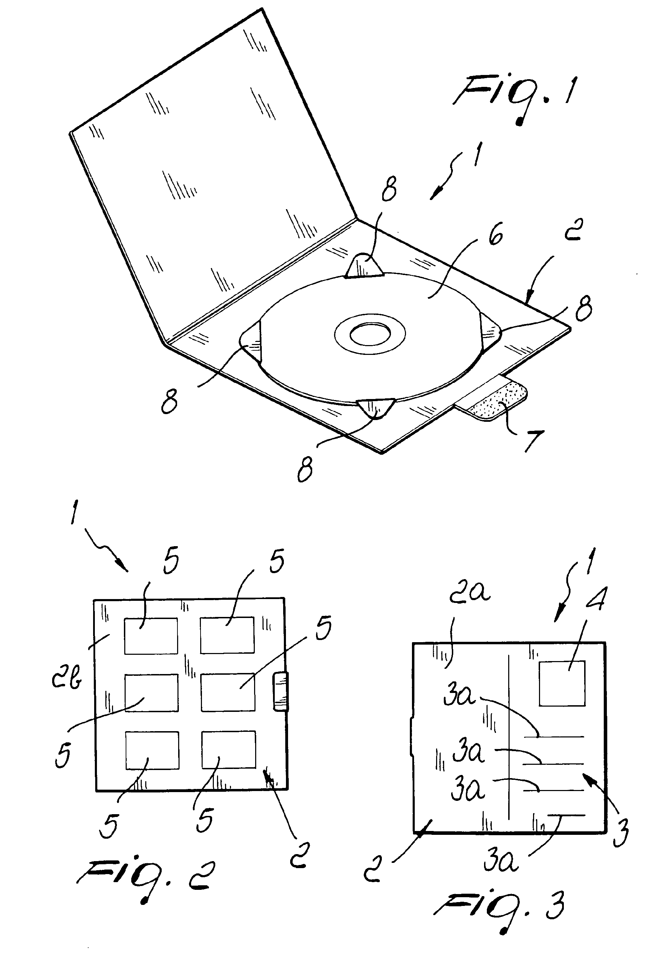

As shown in particular in Figure 1, the container 2 can be conveniently provided with means for retaining the digital data medium 6, such as for example one or more engagement wings 8 for a respective peripheral portion of the digital data medium 6.

In a further embodiment, any images 5 optionally present on the front face 2b of the container 2 may be correlated in some way to the digital data (for example video clips) stored on the digital data medium 6.

It is further possible to send audiovisual narrations related to the tourist locations where one is located, or as an alternative, the person or company, that intends to send a mail product 1 according to the invention, can directly record data on the digital data medium 6.

According to another aspect, the digital data medium 6 may have a space intended to contain additional information, such as for example advertising and/or promotional information.

Advantageously, the container 2 is provided with retention means that are constituted for example by at least one wing for engaging a peripheral portion of the digital data medium 6.

Furthermore, the container 2 may have closure means that can be constituted, as shown by Figure 1, by at least one closure wing 7 that supports bonding means, such as for example an adhesive.

However, the closure means may also be simply constituted by one or more portions (formed for example at the faces of the container 2) that are designed to face each other, which support bonding means such as an adhesive.

Operation of the invention is evident from what has been described above.

It has been found that a mail product according to the invention fully achieves the intended aim and objects.

In particular, a mail product according to the invention allows to send in a simple and straightforward manner a plurality of data beyond compare, in terms of quality and quantity, with the data that can be sent on conventional media such as paper media.

The characteristics indicated as advantageous, convenient or the like may also be omitted or be replaced by equivalents.

All the details may further be replaced with other technically equivalent elements.

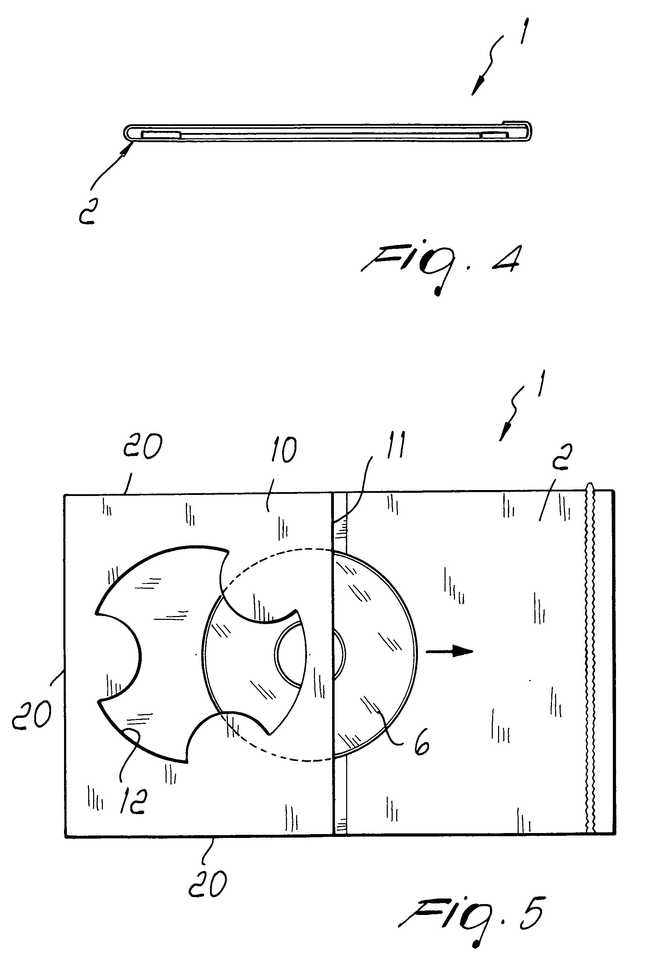

Thus, for example, as clearly shown in Figure 4, the retention means can be constituted by a coupling face 10 that is connected at least partially at a peripheral edge 20 to the face 2a and is provided with a slot 11 for inserting and extracting the digital data medium 6.

In particular, the coupling face 10 is provided with an actuation opening 12 that allows to push along the direction indicated by the arrows in Figure 4, the digital data medium 6 out of the insertion and extraction slot 11.

The materials and the dimensions may be any according to requirements.

The disclosures in Italian Patent Application No. VR2003A000018 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs

## Claims

1. A mail product, **characterized in that** it comprises a container for accommodating at least one digital data medium, said container comprising a region that is adapted for application of addressee identification data.

2. The mail product according to claim 1, **characterized in that** said container comprises a franking area.

3. The mail product according to claim 1, **characterized in that** said container comprises means for retaining said at least one digital data medium.

4. The mail product according to one or more of the preceding claims, **characterized in that** said container comprises an envelope.

5. The mail product according to one or more of the preceding claims, **characterized in that** said container comprises a protective sleeve.

6. The mail product according to one or more of the preceding claims, **characterized in that** said franking area comprises a preprinted stamp.

7. The mail product according to one or more of the preceding claims, **characterized in that** said at least one digital data medium comprises a DVD (Digital Versatile Disc).

8. The mail product according to one or more of the preceding claims, **characterized in that** said at least one digital data medium comprises a CD-ROM, a Video CD or a Super Video CD.

9. The mail product according to one or more of the preceding claims, **characterized in that** said retention means comprise at least one engagement wing for a peripheral portion of said at least one digital data medium.

10. The mail product according to one or more of the preceding claims, **characterized in that** said retention means comprise a coupling face that is connected at least partially to the peripheral edge of said container and has a slot for the insertion and extraction of said digital data medium.

11. The mail product according to one or more of the preceding claims, **characterized in that** said coupling face comprises an actuation opening for extracting said digital data medium through said insertion and extraction slot.

12. The mail product according to one or more of the preceding claims, **characterized in that** said at least one digital data medium comprises a space for recording additional information.

13. The mail product according to one or more of the preceding claims, **characterized in that** said additional information comprises advertising and/or promotional information.

14. The mail product according to one or more of the preceding claims, **characterized in that** it comprises means for closing said container.

15. The mail product according to one or more of the preceding claims, **characterized in that** said closure means comprise a closure wing that supports adhesive means.

16. The mail product according to one or more of the preceding claims, **characterized in that** said closure means comprise at least one portion that supports adhesive means.
